# EUROPEAN PATENT APPLICATION

(11) **EP 3 671 581 A1**
(43) Date of publication of application: **24.06.2020**
(21) Application number: 19216575.1
(22) Date of filing: 16.12.2019
(51) Int. Cl.: G06Q 10/00, A47L 9/00, A47L 11/00

(54) **CLEANING APPLIANCE, CONTROLLING METHOD AND SYSTEM FOR THE SAME**

(30) Priority: 20.12.2018 CN 201811561152
(71) Applicant: Jiangsu Midea Cleaning Appliances Co., Ltd., Suzhou, Jiangsu 215100 (CN); Midea Group Co., Ltd., Foshan, Guangdong 528311 (CN)
(72) Inventor: SUN, Shuping, Suzhou, Jiangsu 215100 (CN); XU, Xiaoming, Suzhou, Jiangsu 215100 (CN); LI, Ke, Suzhou, Jiangsu 215100 (CN); LI, Jiuxiang, Suzhou, Jiangsu 215100 (CN); GAO, Lei, Suzhou, Jiangsu 215100 (CN)
(74) Representative: RGTH

(57) **Abstract**

A cleaning appliance and a controlling method and system for the same are provided. The controlling method includes: an application transmitting a work parameter for the cleaning appliance to a cloud server; the cloud server receiving the work parameter and transmitting the work parameter to the cleaning appliance; the cleaning appliance receiving the work parameter, working in accordance with the work parameter, acquiring work data of the cleaning appliance in a working process and transmitting the work data to the cloud server; and the cloud server generating recommended cleaning data according to the work parameter and the work data, and transmitting the recommended cleaning data to the cleaning appliance, so as to enable the cleaning appliance to work in accordance with the recommended cleaning data in a subsequent working process, thereby providing the user with intelligent home experiences, such as reminding the user to clean, recommending a cleaning plan to the user, *etc.*

## Description

### FIELD

The present disclosure relates to the technical field of cleaning appliances, and more particularly to a cleaning appliance, and a controlling method and system for the same.

### BACKGROUND

With the development of science and technology, cleaning robots have gradually become the main tools for household cleaning. However, the problem in the related art is that the cleaning robot does not perform cleaning work until receiving the instruction from the user, which will affect the comfort of the user's life if the user forgets to transmit the cleaning instruction to the cleaning robot when the user is on a business trip or is too busy.

### SUMMARY

Embodiments of the present disclosure seek to solve at least one of the problems existing in the related art to at least some extent.

For this, a first objective of the present disclosure is to provide a controlling method for a cleaning appliance, by which recommended cleaning data is generated through machine learning, thereby providing the user with intelligent home experiences, such as reminding the user to clean, recommending a cleaning plan to the user, *etc.*

A second objective of the present disclosure is to provide a controlling system for a cleaning appliance.

A third objective of the present disclosure is to provide a cleaning appliance.

A fourth objective of the present disclosure is to provide a non-transitory computer-readable storage medium.

For achieving the above objectives, embodiments of a first aspect of the present disclosure provide a controlling method for a cleaning appliance, including: an application transmitting a work parameter for the cleaning appliance to a cloud server; the cloud server receiving the work parameter and transmitting the work parameter to the cleaning appliance; the cleaning appliance receiving the work parameter, working in accordance with the work parameter, acquiring work data of the cleaning appliance in a working process and transmitting the work data to the cloud server; and the cloud server generating recommended cleaning data according to the work parameter and the work data, and transmitting the recommended cleaning data to the cleaning appliance, such that the cleaning appliance works in accordance with the recommended cleaning data in a subsequent working process.

In an embodiment of the present disclosure, the cloud server acquires a target region where the cleaning appliance is located and acquires weather information of the target region; and the cloud server modifies the recommended cleaning data according to the target region and the weather information of the target region.

In an embodiment of the present disclosure, the cloud server modifying the recommended cleaning data according to the target region and the weather information of the target region includes: acquiring a first modification coefficient for the weather information, and modifying the recommended cleaning data according to the first modification coefficient for the weather information to obtain first recommended cleaning data; acquiring a second modification coefficient for the target region, and modifying the first recommended cleaning data according to the second modification coefficient for the target region to obtain second recommended cleaning data; and taking the second recommended cleaning data as final recommended cleaning data for the cleaning appliance.

In an embodiment of the present disclosure, the work parameter, the work data, the target region and the weather information are input into a trained machine learning model for learning to obtain a recommending probability for each set of recommended cleaning data corresponding to the cleaning appliance, and a set of recommended cleaning data with the maximum recommending probability is selected as the recommended cleaning data.

In an embodiment of the present disclosure, the cloud server transmits to the cleaning appliance an instruction for acquiring type information of an object to be cleaned; the cleaning appliance acquires the type information of the object to be cleaned, and transmits to the cloud server the type information of the object to be cleaned; and the cloud server modifies the recommended cleaning data according to the type information of the object to be cleaned.

In the controlling method for a cleaning appliance according to embodiments of the present disclosure, the cloud server receives the work parameter for the cleaning appliance transmitted by the application and the work data of the cleaning appliance acquired when the cleaning appliance works in accordance with the work parameter, and generates the recommended cleaning data according to the work parameter and the work data, so as to enable the cleaning appliance to work in accordance with the recommended cleaning data in the subsequent working process. Therefore, with the controlling method according to embodiments of the present disclosure, the recommended cleaning data may be generated and transmitted to user so as to achieve the recommendation of a cleaning plan or be transmitted to the cleaning appliance to enable the cleaning appliance to work in accordance with the recommended cleaning data, thereby effectively improving the intelligence of the cleaning appliance and improving the user experience.

For achieving the above objectives, embodiments of a second aspect of the present disclosure provide a controlling system for a cleaning appliance, including: an application, configured to transmit a work parameter for the cleaning appliance to a cloud server; the cloud server, configured to receive the work parameter and transmit the work parameter to the cleaning appliance; and the cleaning appliance, configured to receive the work parameter, work in accordance with the work parameter, acquire work data of the cleaning appliance in a working process, and transmit the work data to the cloud server. The cloud server is further configured to generate recommended cleaning data according to the work parameter and the work data, and transmit the recommended cleaning data to the cleaning appliance, such that the cleaning appliance works in accordance with the recommended cleaning data in a subsequent working process.

In an embodiment of the present disclosure, the cloud server is further configured to: acquire a target region where the cleaning appliance is located and acquire weather information of the target region; and modify the recommended cleaning data according to the target region and the weather information of the target region.

In an embodiment of the present disclosure, the cloud server is further configured to: acquire a first modification coefficient for the weather information, and modify the recommended cleaning data according to the first modification coefficient for the weather information to obtain first recommended cleaning data; acquire a second modification coefficient for the target region, and modify the first recommended cleaning data according to the second modification coefficient for the target region to obtain second recommended cleaning data; and take the second recommended cleaning data as final recommended cleaning data for the cleaning appliance.

In an embodiment of the present disclosure, the cloud server is further configured to: input the work parameter, the work data, the target region and the weather information of the target region into a trained machine learning model for learning to obtain a recommending probability for each set of recommended cleaning data corresponding to the cleaning appliance; and select a set of recommended cleaning data with the maximum recommending probability as the recommended cleaning data.

In an embodiment of the present disclosure, the cloud server is further configured to: transmit to the cleaning appliance an instruction for acquiring type information of an object to be cleaned, and modify the recommended cleaning data according to the type information of the object to be cleaned; and the cleaning appliance is further configured to: acquire the type information of the object to be cleaned, and transmit to the cloud server the type information of the object to be cleaned.

For achieving the above objectives, embodiments of a third aspect of the present disclosure provide a cleaning appliance, including: a processor; a memory; and computer programs stored in the memory and executable by the processor. The computer programs, when executed by the processor, cause the controlling method for a cleaning appliance as described in embodiments of the first aspect of the present disclosure to be performed.

For achieving the above objectives, embodiments of a fourth aspect of the present disclosure provide a non-transitory computer-readable storage medium having stored therein computer programs that, when executed by a processor, cause the controlling method for a cleaning appliance as described in embodiments of the first aspect of the present disclosure to be performed.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the drawings, in which:
FIG 1 is a flow chart of a controlling method for a cleaning appliance according to an embodiment of the present disclosure;
FIG. 2 is a flow chart of a controlling method for a cleaning appliance according to an embodiment of the present disclosure;
FIG. 3 is a flow chart of a controlling method for a cleaning appliance according to an embodiment of the present disclosure;
FIG. 4 is a flow chart of a controlling method for a cleaning appliance according to an embodiment of the present disclosure; and
FIG. 5 is a block diagram of a controlling system for a cleaning appliance according to an embodiment of the present disclosure.

### DETAILED DESCRIPTION

Reference will now be made in detail to embodiments of the present disclosure, examples of which are illustrated in the accompanying drawings, in which the same or similar elements and elements having same or similar functions are denoted by like reference numerals throughout the descriptions. The embodiments described herein with reference to the accompanying drawings are explanatory and illustrative, which are used to generally understand the present disclosure, and shall not be construed to limit the present disclosure.

In the following, a controlling method for a cleaning appliance and a server according to embodiments of the present disclosure will be described in detail with reference to the accompanying drawings.

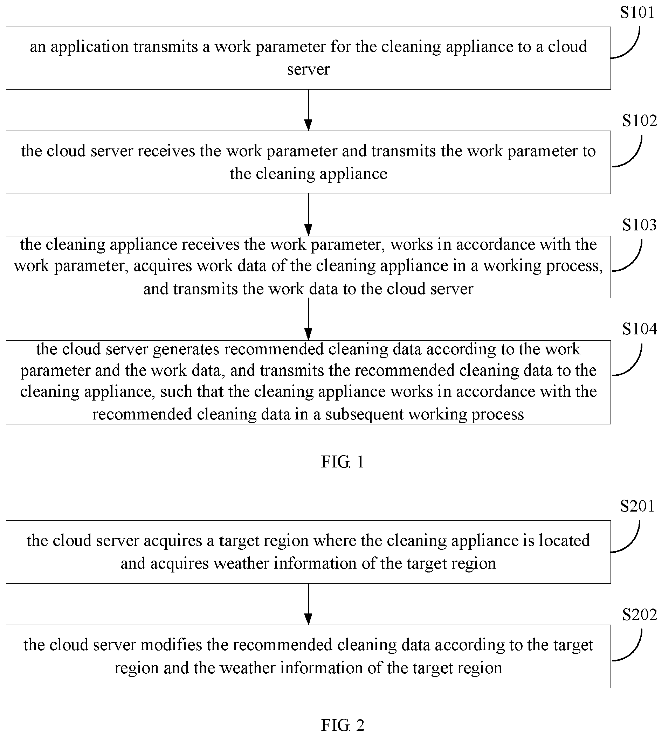

FIG. 1 is a flow chart of a controlling method for a cleaning appliance according to an embodiment of the present disclosure. As illustrated in FIG. 1, the controlling method for a cleaning appliance includes the following acts as illustrated at blocks of FIG. 1.

At block S101, an application transmits a work parameter for the cleaning appliance to a cloud server.

It should be noted that, the work parameter for the cleaning appliance may be acquired through a control instruction, and the control instruction may be input by a user. In an embodiment, the user may input the control instruction through an application (such as an application in a mobile terminal) associated with the cleaning appliance.

Specifically, the user may input the control instruction into the application in the mobile terminal when controlling the cleaning appliance, and the control instruction includes the work parameter for the cleaning appliance. Then, the application transmits the work parameter for the cleaning appliance to the cloud server according to the control instruction. The work parameter may include cleaning time, a cleaning mode, a suction level, water consumption rate in a mopping process, and the like.

At block S102, the cloud server receives the work parameter and transmits the work parameter to the cleaning appliance.

That is, after receiving the work parameter transmitted by the application, the cloud server further transmits the work parameter to the cleaning appliance.

At block S103, the cleaning appliance receives the work parameter, works in accordance with the work parameter, acquires work data of the cleaning appliance in a working process, and transmits the work data to the cloud server.

It should be understood that, after acquiring the work parameter, the cleaning appliance works in accordance with the work parameter, and collects current work data in the working process, such as actual time consumption for cleaning, a cleaning map, household floor information, household dust distribution, and the like.

Specifically, when the user controls the cleaning work of the cleaning appliance through the application of the mobile terminal, the user inputs the work parameter for the cleaning appliance through the application of the mobile terminal. The mobile terminal transmits the work parameter to the cloud server through wireless network. The cloud server further transmits the work parameter to the cleaning appliance through the wireless network. After receiving the work parameter, a wifi module of the cleaning appliance transmits the work parameter to a baseplate of the cleaning appliance through a serial port, so as to enable the cleaning appliance to execute the work parameter. The cleaning appliance collects the current work data in the work process, and then the baseplate of the cleaning appliance transmits the work data to the wifi module of the cleaning appliance through the serial port. The wifi module transmits the work data to the cloud server through the wireless network. In this way, cloud server can acquire the work parameter and the work data of the cleaning appliance.

At block S104, the cloud server generates recommended cleaning data according to the work parameter and the work data, and transmits the recommended cleaning data to the cleaning appliance, such that the cleaning appliance works in accordance with the recommended cleaning data in a subsequent working process.

In some embodiments, the cloud server may generate the recommended cleaning data according to the work parameter and the work data by means of machine learning.

That is, after acquiring the work parameter and the work data of the cleaning appliance, the cloud server uses the work parameter and the work data as inputs for the machine learning, analyzes cleaning habits of the user through a machine learning (such as a neural network) algorithm to generate the recommended cleaning data, and transmits the recommended cleaning data to the cleaning appliance, so as to enable the cleaning appliance to work in accordance with the recommended cleaning data in the subsequent working process. In other words, after the user uses the cleaning appliance to clean, the recommended cleaning data can be generated through the machine learning according to the work parameter input by the user and the work data obtained in the actual cleaning process.

The recommended cleaning data may include a cleaning cycle and the work parameter, *etc.* For example, the user may be recommended to clean periodically, and the recommended cleaning data may be pushed to the user on a corresponding date. For another example, the recommended cleaning data, like a cleaning sequence or a cleaning intensity, may be provided for the user when the user sets the work parameter.

For example, when the user frequently controls the cleaning appliance for cleaning, recommended cleaning data with reduced cleaning intensity may be provided for the user, or the user may be recommended to only clean heavily stained places, like the kitchen, the vestibule, *etc.*

In some embodiments of the present disclosure, the cleaning appliance may also be controlled for cleaning according to the recommended cleaning data.

For example, when the recommended cleaning data include periodical cleaning data, the cleaning appliance can be directly controlled to perform cleaning when the cleaning date is reached, so that even if the user is too busy to control the cleaning appliance, the cleaning appliance can still perform the cleaning work, so that the user's home can be kept clean, thereby improving the user experience.

In an embodiment of the present disclosure, the recommended cleaning data may also be transmitted to the mobile terminal which is associated with the cleaning appliance.

That is to say, the recommended cleaning data, after generated, may be transmitted to the mobile terminal of the user, so as to remind the user to perform cleaning control, or the user may adjust the setting of the work parameter according to the recommended cleaning data.

In some embodiments of the present disclosure, as illustrated in FIG. 2, the controlling method for a cleaning appliance further includes the following acts as illustrated at blocks of FIG. 2.

At block S201, the cloud server acquires a target region where the cleaning appliance is located and acquires weather information of the target region.

It should be noted that, the target region where the cleaning appliance is located may include an area where the cleaning appliance is located, such as a city, a city division (district), *etc.,* and may also include an indoor position where the cleaning appliance is located, such as a bedroom, a living room, a kitchen, *etc.*

At block S202, the cloud server modifies the recommended cleaning data according to the target region and the weather information of the target region.

On the one hand, the cloud server can modify the recommended cleaning data by modifying a machine learning model. That is, by optimizing the machine learning model, the recommended cleaning data output by the machine learning model may be modified. In some embodiments of the present disclosure, manners for optimizing the machine learning model may include adding input items for the machine learning, like adding items of the target region, the weather information of the target region, *etc.* In an embodiment, the weather information of the target region may include a PM value of the current air, weather conditions, the humidity, the temperature, *etc.*

Specifically, the cloud server may input the work parameter, the work data, the target region and the weather information into a trained machine learning model for learning to obtain a recommending probability for each set of recommended cleaning data corresponding to the cleaning appliance, and select a set of recommended cleaning data with the maximum recommending probability as the recommended cleaning data.

That is to say, together with the work parameter and the work data, the target region and the weather information of the target region also can be used as inputs for the machine learning, so as to generate recommended cleaning information that conforms to both the user's habit and the environment of the target area. In an embodiment, it is possible to adjust the work parameter according to current weather information of the target area, after the recommended cleaning information is generated. For example, on a windy day, the cleaning intensity or the water speed may be increased.

Therefore, the cleaning appliance in embodiments of the present disclosure is able to work according to the recommended cleaning data with the maximum recommending probability, so that the work parameter of the cleaning appliance can meet the work parameter set by the user, the work data of the cleaning appliance in the actual working process, the target area and the weather condition of the target area.

It should be understood that the machine learning model used in embodiments of the present disclosure is obtained by training according to the work parameter, the work data, the target region, and the weather information of the target region.

In some embodiments, the cleaning appliance may be a household cleaning appliance like a cleaning robot.

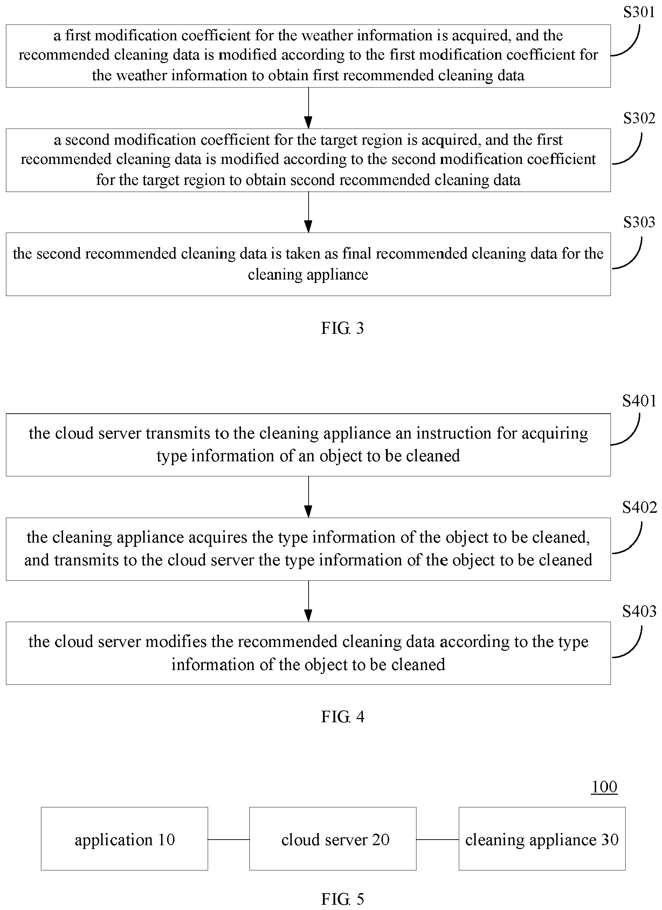

On the other aspect, as illustrated in FIG. 3, the cloud server modifying the recommended cleaning data according to the target region and the weather information of the target region includes the following acts as illustrated at blocks of FIG. 3.

At block S301, a first modification coefficient for the weather information is acquired, and the recommended cleaning data is modified according to the first modification coefficient for the weather information to obtain first recommended cleaning data.

At block S302, a second modification coefficient for the target region is acquired, and the first recommended cleaning data is modified according to the second modification coefficient for the target region to obtain second recommended cleaning data.

At block S303, the second recommended cleaning data is taken as final recommended cleaning data for the cleaning appliance.

That is to say, the cloud server may also modify the recommended cleaning data through the modification coefficients according to the target region and the weather information of the target region.

Specifically, after obtaining the recommended cleaning data based on the machine learning, the cloud server may acquire the first modification coefficient for the weather information, and modify the recommended cleaning data according to the first modification coefficient for the weather information to obtain the first recommended cleaning data. For example, when the weather information indicates that the humidity is low, the recommended cleaning data may be modified, by which to increase the humidity during the working process of the cleaning appliance. Further, the cloud server may acquire the second modification coefficient for the target region, and modify the first recommended cleaning data according to the second modification coefficient for the target region, to obtain the second recommended cleaning data. That is, after modifying the recommended cleaning data according to the weather information of the target region to obtain the first recommended cleaning data, the cloud server may also modify the first recommended cleaning data according to the second modification coefficient for the target region to obtain the second recommended cleaning data, and take the second recommended cleaning data as the final recommended cleaning data for the cleaning appliance, so as to enable the cleaning appliance to work in accordance with the final recommended cleaning data.

In some embodiments of the present disclosure, as illustrated in FIG. 4, before the recommended cleaning data is transmitted to the cleaning appliance, the controlling method for a cleaning appliance further includes the following acts as illustrated at blocks of FIG. 4.

At block S401, the cloud server transmits to the cleaning appliance an instruction for acquiring type information of an object to be cleaned.

At block S402, the cleaning appliance acquires the type information of the object to be cleaned, and transmits to the cloud server the type information of the object to be cleaned.

At block S403, the cloud server modifies the recommended cleaning data according to the type information of the object to be cleaned.

That is to say, the cloud server can also modify the recommended cleaning data according to the type information of the object to be cleaned.

Specifically, the cloud server may also transmit the instruction for acquiring the type information of the object to be cleaned to the cleaning appliance. The cleaning appliance acquires the type information of the object to be cleaned, and transmits the type information of the object to be cleaned to the cloud server. The cloud server modifies the recommended cleaning data according to the type information of the object to be cleaned.

For example, after the cloud server transmits the instruction for acquiring the type information of the object to be cleaned to the cleaning appliance, the cleaning appliance acquires that the type information of the objects to be cleaned is the bedroom and the kitchen, and then transmits the type information of the objects to be cleaned (the bedroom and the kitchen) to the cloud server. The cloud server can modify the recommended cleaning data according to the type information of the object to be cleaned, for example, the cloud server modifies the cleaning sequence to be the bedroom first, and then the kitchen.

Therefore, the controlling method for a cleaning appliance according to embodiments of the present disclosure is capable of generating the recommended cleaning data through the machine learning according to the work parameter and the work data of the cleaning appliance, thereby making the cleaning manner more scientific and reasonable, and effectively improving the cleaning efficiency in the cleaning process. For example, when the power is limited, the cleaning sequence may be arranged reasonably. Moreover, the recommended cleaning data can be transmitted to the user to allow the user to determine whether to apply the recommended cleaning data, thereby providing the user with better and more flexible experience.

In summary, with the controlling method for a cleaning appliance according to embodiments of the present disclosure, the cloud server receives the work parameter for the cleaning appliance transmitted by the application and the work data of the cleaning appliance acquired when the cleaning appliance works in accordance with the work parameter, and generates the recommended cleaning data according to the work parameter and the work data, so as to enable the cleaning appliance to work in accordance with the recommended cleaning data in the subsequent working process. Therefore, with the controlling method according to embodiments of the present disclosure, the recommended cleaning data may be generated and transmitted to user so as to achieve the recommendation of a cleaning plan or be transmitted to the cleaning appliance to enable the cleaning appliance to work in accordance with the recommended cleaning data, thereby effectively improving the intelligence of the cleaning appliance and improving the user experience.

In order to achieve the above embodiments, the present disclosure further provides a server.

FIG. 5 is a block diagram of a controlling system for a cleaning appliance according to an embodiment of the present disclosure. As illustrated in FIG. 5, the controlling system 100 includes: an application 10, a cloud server 20, and a cleaning appliance 30.

The application 10 is configured to transmit a work parameter for the cleaning appliance to a cloud server. The cloud server 20 is configured to receive the work parameter and transmit the work parameter to the cleaning appliance. The cleaning appliance 30 is configured to receive the work parameter, work in accordance with the work parameter, acquire work data of the cleaning appliance in a working process, and transmit the work data to the cloud server. The cloud server 20 is further configured to generate recommended cleaning data according to the work parameter and the work data, and transmit the recommended cleaning data to the cleaning appliance, such that the cleaning appliance works in accordance with the recommended cleaning data in a subsequent working process.

Further, the cloud server 20 is further configured to: acquire a target region where the cleaning appliance is located and acquire weather information of the target region; and modify the recommended cleaning data according to the target region and the weather information of the target region.

Further, the cloud server 20 is further configured to: acquire a first modification coefficient for the weather information, and modify the recommended cleaning data according to the first modification coefficient for the weather information to obtain first recommended cleaning data; acquire a second modification coefficient for the target region, and modify the first recommended cleaning data according to the second modification coefficient for the target region to obtain second recommended cleaning data; and take the second recommended cleaning data as final recommended cleaning data for the cleaning appliance.

Further, the cloud server 20 is further configured to: input the work parameter, the work data, the target region and the weather information of the target region into a trained machine learning model for learning to obtain a recommending probability for each set of recommended cleaning data corresponding to the cleaning appliance; and select a set of recommended cleaning data with the maximum recommending probability as the recommended cleaning data.

Further, the cloud server is further configured to: transmit to the cleaning appliance an instruction for acquiring type information of an object to be cleaned, and modify the recommended cleaning data according to the type information of the object to be cleaned. The cleaning appliance is further configured to: acquire the type information of the object to be cleaned, and transmit to the cloud server the type information of the object to be cleaned.

It should be noted that, illustrations and explanations made in embodiments hereinbefore with respect to the controlling method for a cleaning appliance are also applicable to the embodiments with respect to the controlling system for a cleaning appliance, which will not be elaborated here.

In order to achieve the above embodiments, the present disclosure further provides a cleaning appliance. The cleaning appliance includes a processor; a memory; and computer programs stored in the memory and executable by the processor. The computer programs, when executed by the processor, cause the controlling method for a cleaning appliance as described in embodiments of the present disclosure hereinbefore to be performed.

In order to achieve the above embodiments, the present disclosure further provides a non-transitory computer-readable storage medium having stored therein computer programs that, when executed by a processor, cause the controlling method for a cleaning appliance as described in embodiments of the present disclosure hereinbefore to be performed.

Reference throughout this specification to "an embodiment", "some embodiments", "one embodiment", "another example", "an example", "a specific example", or "some examples", means that a particular feature, structure, material, or characteristic described in connection with the embodiment or example is included in at least one embodiment or example of the present disclosure. Thus, the appearances of the phrases such as "in some embodiments", "in one embodiment", "in an embodiment", "in another example", "in an example", "in a specific example", or "in some examples", in various places throughout this specification are not necessarily referring to the same embodiment or example of the present disclosure. Furthermore, the particular features, structures, materials, or characteristics may be combined in any suitable manner in one or more embodiments or examples. In addition, in the absence of contradiction, those skilled in the art can combine the different embodiments or examples described in this specification, or combine the features of different embodiments or examples.

In addition, terms such as "first" and "second" are used herein for purposes of description and are not intended to indicate or imply relative importance or significance or to imply the number of indicated technical features. Thus, the feature defined with "first" and "second" may include one or more of this feature. In the description of the present invention, the phrase of "a plurality of' means two or more than two, such as two or three, unless specified otherwise.

Any process or method described in a flow chart or described herein in other ways may be understood to include one or more modules, segments or portions of codes of executable instructions for achieving specific logical functions or steps in the process, and the scope of a preferred embodiment of the present disclosure includes other implementations, in which the order of execution is different from what is shown or discussed, including executing functions in a substantially simultaneous manner or in an opposite order according to the related functions. These and other aspects should be understood by those skilled in the art.

The logic and/or step shown in the flow chart or described in other manners herein, for example, a particular sequence table of executable instructions for realizing the logical function, may be specifically achieved in any computer readable medium to be used by the instruction execution system, device or equipment (such as the system based on computers, the system including processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium include but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

It can be understood by those skilled in the art that all or part of the steps in the method of the above embodiments can be implemented by instructing related hardware via programs, the program may be stored in a computer readable storage medium, and the program includes one step or combinations of the steps of the method when the program is executed.

In addition, each functional unit in embodiments of the present disclosure may be integrated in one progressing module, or each functional unit exists as an independent unit, or two or more functional units may be integrated in one module. The integrated module can be embodied in hardware, or software. If the integrated module is embodied in software and sold or used as an independent product, it can be stored in the computer readable storage medium.

The above described storage medium may be, but is not limited to, read-only memories, magnetic disks, or optical disks.

Although embodiments have been shown and described, it would be appreciated by those skilled in the art that the above embodiments are explanatory, illustrative, cannot be construed to limit the present disclosure, and changes, alternatives, variants and modifications can be made in the embodiments without departing from spirit, principles and scope of the present disclosure.

## Claims

1. A controlling method for a cleaning appliance, comprising:
an application transmitting (S101) a work parameter for the cleaning appliance to a cloud server;
the cloud server receiving (S102) the work parameter and transmitting the work parameter to the cleaning appliance;
the cleaning appliance receiving (S103) the work parameter, working in accordance with the work parameter, acquiring work data of the cleaning appliance in a working process and transmitting the work data to the cloud server; and
the cloud server generating (S104) recommended data according to the work parameter and the work data, and transmitting the recommended data to the cleaning appliance, such that the cleaning appliance works in accordance with the recommended data in a subsequent working process.

2. The controlling method according to claim 1, further comprising:
the cloud server acquiring (S201) a target region where the cleaning appliance is located and acquiring weather information of the target region; and
the cloud server modifying (S202) the recommended data according to the target region and the weather information of the target region.

3. The controlling method according to claim 1 or 2, wherein the cloud server modifying (S202) the recommended cleaning data according to the target region and the weather information of the target region comprises:
acquiring (S301) a first modification coefficient for the weather information, and modifying the recommended data according to the first modification coefficient for the weather information to obtain first recommended data;
acquiring (S302) a second modification coefficient for the target region, and modifying the first recommended data according to the second modification coefficient for the target region to obtain second recommended data; and
taking (S303) the second recommended data as final recommended data for the cleaning appliance.

4. The controlling method according to any one of claims 1 to 3, further comprising:
inputting the work parameter, the work data, the target region and the weather information into a trained machine learning model for learning to obtain a recommending probability for each corresponding set of recommended data for the cleaning appliance; and
selecting a set of recommended data with the maximum recommending probability as the recommended data.

5. The controlling method according to any one of claims 1 to 4, before transmitting the recommended data to the cleaning appliance, further comprising:
the cloud server transmitting (S401) to the cleaning appliance an instruction for acquiring type information of an object to be cleaned;
the cleaning appliance acquiring (S402) the type information of the object to be cleaned, and transmitting to the cloud server the type information of the object to be cleaned; and
the cloud server modifying (S403) the recommended data according to the type information of the object to be cleaned.

6. A controlling system for a cleaning appliance, comprising:
an application, configured to transmit a work parameter for the cleaning appliance to a cloud server;
the cloud server, configured to receive the work parameter and transmit the work parameter to the cleaning appliance; and
the cleaning appliance, configured to receive the work parameter, work in accordance with the work parameter, acquire work data of the cleaning appliance in a working process, and transmit the work data to the cloud server,
wherein the cloud server is further configured to generate recommended data according to the work parameter and the work data, and transmit the recommended data to the cleaning appliance, such that the cleaning appliance works in accordance with the recommended cleaning data in a subsequent working process.

7. The controlling system according to claim 6, wherein the cloud server is further configured to:
acquire a target region where the cleaning appliance is located and acquire weather information of the target region; and
modify the recommended data according to the target region and the weather information of the target region.

8. The controlling system according to claim 6 or 7, wherein the cloud server is further configured to:
acquire a first modification coefficient for the weather information, and modify the recommended data according to the first modification coefficient for the weather information to obtain first recommended cleaning data;
acquire a second modification coefficient for the target region, and modify the first recommended data according to the second modification coefficient for the target region to obtain second recommended data; and
take the second recommended data as final recommended cleaning data for the cleaning appliance.

9. The controlling system according to any one of claims 6 to 8, wherein the cloud server is further configured to:
input the work parameter, the work data, the target region and the weather information of the target region into a trained machine learning model for learning to obtain a recommending probability for each corresponding set of recommended data for the cleaning appliance; and
select a set of recommended data with the maximum recommending probability as the recommended data.

10. The controlling system according to any one of claims 6 to 9, wherein the cloud server is further configured to: transmit to the cleaning appliance an instruction for acquiring type information of an object to be cleaned, and modify the recommended data according to the type information of the object to be cleaned; and
the cleaning appliance is further configured to: acquire the type information of the object to be cleaned, and transmit to the cloud server the type information of the object to be cleaned.

11. A cleaning appliance, comprising:
a processor;
a memory; and
a computer program stored in the memory and executable by the processor,
wherein the computer program, when executed by the processor, causes a controlling method for a cleaning appliance according to any one of claims 1 to 5 to be performed.

12. A non-transitory computer-readable storage medium having stored therein a computer program that, when executed by a processor, causes a controlling method for a cleaning appliance according to any one of claims 1 to 5 to be performed.
